# FASCICULE DE BREVET EUROPEEN

(11) **EP 0 991 579 B1**
(45) Date de publication et mention de la délivrance du brevet: **28.05.2003**
(21) Numéro de dépôt: 99914621.0
(22) Date de dépôt: 20.04.1999
(51) Int. Cl.: B65G 1/04

(54) **DISPOSITIF DE STOCKAGE AUTOMATIQUE POUR ECHANTILLONS BIOLOGIQUES OU CHIMIQUES**
VORRICHTUNG ZUM AUTOMATISCHEN SPEICHERN VON BIOLOGISCHEN ODER CHEMISCHEN PROBEN
DEVICE FOR AUTOMATICALLY STORING BIOLOGICAL OR CHEMICAL SAMPLES

(30) Priorité: 22.04.1998 FR 9805281
(43) Date de publication de la demande: 12.04.2000
(73) Titulaire: Jouan SA, 44807 Saint Herblain Cedex (FR)
(72) Inventeur: JUNCA, Serge, F-64350 Maspie (FR)
(74) Mandataire: Chambon, Gérard
(86) Numéro de dépôt international: FR9900926
(87) Numéro de publication internationale: WO99054238

(56) Documents cités:
- EP-A- 0 005 169
- EP-A- 0 799 776
- US-A- 3 456 817
- US-A- 4 232 988
- US-A- 4 252 488
- US-A- 4 726 725
- US-A- 4 986 715

## Description

La présente invention concerne un dispositif de stockage d'un très grand nombre d'échantillons.

Elle s'applique notamment, mais non exclusivement, aux industries pharmaceutique, cosmétique, et des biotechnologies qui accumulent et manipulent de grandes quantités (jusqu'à plusieurs millions) d'échantillons biologiques et chimiques pour la mise au point de nouveaux produits.

Dans ce contexte, il apparaît nécessaire de pouvoir stocker et archiver ces échantillons pendant de longues périodes, de manière à ce qu'ils soient rapidement accessibles, tout en garantissant des conditions physico-chimiques de stockage propres à la conservation de ces échantillons.

Les dispositifs de stockage proposés actuellement mettent en oeuvre des techniques classiques de stockage : utilisation d'armoires et de tiroirs. De tels dispositifs sont mal adaptés pour permettre un accès automatisé et rapide aux échantillons qu'ils contiennent. Ils sont par ailleurs très coûteux et nécessitent des installations particulières de laboratoire. En particulier, lorsque les échantillons à stocker requièrent des conditions particulières de stockage, il est nécessaire de prévoir une salle spécialement conçue à cet effet. En outre, ils ne sont pas modulaires, si bien qu'il n'est pas possible d'augmenter leur capacité de stockage.

On connaît par ailleurs des enceintes de stockage cylindriques comportant plusieurs étagères annulaires arrangées en une pluralité de niveaux. Toutefois, ces enceintes ne mettent pas en oeuvre de dispositifs de chargement et déchargement automatisés qui soient efficaces et fiables, même lorsque le dispositif comporte sur un même niveau plusieurs étagères annulaires concentriques.

La présente invention a pour but de supprimer ces inconvénients. A cet effet, elle propose un dispositif de stockage automatisé comprenant une enceinte de stockage renfermant une multiplicité de logements pour 1 es objets à stocker, disposés côte à côte et répartis sur une pluralité de niveaux.

Selon l'invention, ce dispositif est caractérisé en ce qu'il comprend un dispositif de chargement et de déchargement mobile d'un logement à l'autre, comportant une plate-forme pour recevoir un objet à charger ou décharger, associée à des moyens pour la déplacer d'un niveau à l'autre ; une pince pour saisir un objet à charger ou décharger munie de deux bras pivotants parallèles comportant chacun une extrémité libre et une extrémité fixe solidaire en rotation d'un axe horizontal commun aux deux bras ; des moyens d'entraînement en rotation des bras autour de cet axe horizontal ; et des moyens pour écarter et resserrer les extrémités libres respectives des bras, les extrémités libres des bras étant chacune munies d'une roulette respective disposée de manière à pouvoir rouler sur la plate-forme lorsque les bras sont entraînés en rotation, les moyens d'entraînement en rotation des bras et l'axe horizontal étant librement mobiles le long d'un axe vertical solidaire de la plate-forme et se déplaçant le long de cet axe vertical sous l'effet de la gravité et de l'entraînement en rotation des bras.

L'invention permet ainsi, avec des moyens relativement simples, d'appliquer à la pince de préhension des objets stockés ou à stocker, un mouvement de rotation de grande amplitude qui lui permet d'atteindre des objets relativement éloignés de l'axe horizontal des bras. Le mouvement vertical de la pince permet en outre de réduire la longueur nécessaire des bras de la pince et ainsi, l'espace nécessaire au mouvement de la pince. Par ailleurs, ce mouvement peut être effectué d'une manière symétrique par rapport à un plan vertical passant par l'axe horizontal de rotation des bras, ce qui permet au dispositif de chargement et de déchargement de déplacer les objets, dans un même mouvement de rotation, entre une position de stockage dans un logement et une position accessible de l'extérieur de l'enceinte.

Avantageusement, les logements de l'enceinte de stockage sont répartis sur des étagères annulaires fixées sur deux cylindres concentriques, à savoir un cylindre extérieur et un cylindre intérieur, chaque cylindre étant entraîné en rotation autour de leur axe longitudinal d'une manière indépendante, la plate-forme de chargement et de déchargement pouvant se déplacer le long d'un axe vertical tangentiellement au cylindre extérieur.

Une telle enceinte offre une grande capacité de stockage dans un volume minimum, l'important débattement de la pince de préhension des objets stockés ou à stocker étant parfaitement adapté pour atteindre aussi bien les logements du cylindre extérieur que ceux du cylindre intérieur. Il suffit pour cela de laisser une colonne de logements libres dans le cylindre extérieur de manière à permettre à l'objet saisi par la pince de glisser d'un logement à l'autre, et sur la plate-forme.

Il s'avère toutefois qu'il est difficile d'ajuster les niveaux respectifs des logements des deux cylindres, de manière à ce qu'ils coïncident parfaiternent, de sorte qu'il existe une petite différence de niveau risquant d'empêcher le glissement de l'objet saisi par la pince d'un logement vers un autre logement situé en regard et légèrement plus haut sur l'autre cylindre.

Pour résoudre ce problème, l'extrémité libre des bras de la pince est munie d'une demi-mâchoire pivotante autour de l'axe de rotation de la roulette, comportant un tampon à coefficient de frottement élevé destiné à venir s'appliquer contre l'objet à saisir, et un patin chanfreiné qui, en rencontrant une différence de niveau, fait pivoter la demi-mâchoire vers le haut et soulève légèrement l'objet saisi.

Alternativement, chaque demi-mâchoire comporte un doigt destiné à venir s'appliquer contre l'objet à saisir, ce doigt étant monté pivotant dans un plan perpendiculaire à l'axe longitudinal de la demi-mâchoire, pour soulever légèrement l'objet en pivotant lorsque la pince est resserrée sur l'objet.

Un mode de réalisation du dispositif selon l'invention sera décrit ci-après, à titre d'exemple non limitatif, avec référence aux dessins annexés dans lesquels
La figure 1 représente une vue en coupe longitudinale du dispositif selon l'invention ;
La figure 2 montre en coupe transversale le dispositif illustré sur la figure 1 ;
Les figures 3 et 4 montrent en détail le dispositif de chargement et de déchargement selon l'invention, respectivement en vue de profil et de face ;
La figure 5 est une vue détaillée de la face intérieure de l'extrémité libre d'un bras de la pince montrée sur les figures 3 et 4 ;
La figure 6 montre plusieurs positions possibles de la pince pour illustrer la dynamique de son mouvement ;
La figure 7 est une vue détaillée de la face intérieure de l'extrémité libre d'un bras de la pince selon une variante de réalisation de l'invention ;
Les figures 8 et 9 sont des vues détaillées de profil de l'extrémité libre du bras de la pince, montrée sur la figure 7, respectivement avant et après maintien d'un objet par la pince.

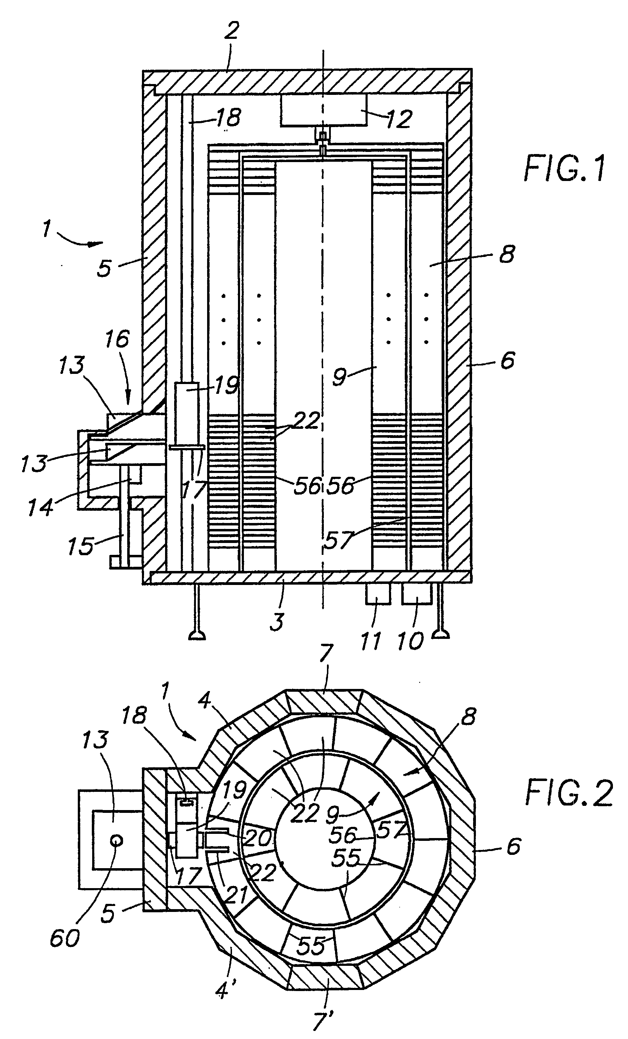

Les figures 1 et 2 représentent une enceinte de stockage 1 de forme tabulaire à section polygonale, formée d'une pluralité de panneaux assemblés, à savoir un panneau supérieur 2, un panneau inférieur 3, et des panneaux latéraux 4,4', 5, 6, 7, 7'. Elle renferme une multiplicité de logements répartis sur une pluralité d'étagères annulaires 22 superposées, fixées les unes aux autres sur la face extérieure d'un cylindre 56, 57 de manière à former deux carrousels 8, 9 concentriques indépendants, à savoir un carrousel intérieur 9 et un carrousel extérieur 8. Ces deux carrousels sont montés rotatifs autour de leur axe longitudinal. Les logements 22 d'une étagère sont séparés des logements adjacents par des cloisons 55.

Les deux carrousels 8, 9 concentriques sont disposés l'un par rapport à l'autre de manière à ce que leurs étagères 22 respectives soient sensiblement au même niveau.

Cette enceinte 1 est supportée par une embase logeant des moteurs 10, 11 à courant continu ou alternatif d'entraînement en rotation des deux cylindres 8, 9, l'indexation des positions des carrousels étant effectuée par des codeurs, par exemple optiques ou magnétiques (non représentés dans les figures).
Cette motorisation est dimensionnée de façon à permettre une rotation complète par exemple en moins de 10 s, soit un accès à n'importe quel logement en moins de 5 s si les moteurs sont bidirectionnels.

La hauteur entre deux étagères est adaptable en fonction de la hauteur des objets à stocker.

Pour permettre l'extraction ou l'insertion d'un objet dans l'enceinte, on a prévu une ouverture 16 horizontale à hauteur fixe, ménagée dans la paroi de l'enceinte.
Cette ouverture est normalement fermée par une plate-forme 13 d'entrée / sortie qui assure de cette manière aussi la fonction de porte, cette ouverture pouvant s'ouvrir et se refermer par déplacement de la plate-forme 13 le long d'un axe vertical 15, ce déplacement étant effectué automatiquement grâce à un moteur 14 à la suite d'une commande à cet effet. Ainsi, la plate-forme 13 est mobile entre deux positions, à savoir une position basse d'ouverture montrée en traits pleins sur la figure 1, dans laquelle l'extracteur 19 peut transférer un objet entre elle et la plate-forme 17, et une position haute de fermeture montrée en traits interrompus dans laquelle elle ferme une ouverture 16 de l'enceinte 1.
En position d'ouverture, la plate-forme 13 est accessible à la l'extracteur 19 qui peut y prendre ou y déposer un objet. En position de fermeture, la plate-forme 13 peut recevoir un objet à introduire dans l'enceinte ou rendre accessible de l'extérieur de l'enceinte 1 un objet qui vient d'y être extrait. A cet effet, la plate-forme 13 est avantageusement munie d'un détecteur 60 permettant de détecter la présence ou non d'un objet sur sa face supérieure.

Le chargement et le déchargement d'un objet sont effectués de manière automatique grâce à un processeur contrôlé par un logiciel, qui commande un extracteur 19 monté sur une plate-forme 17, disposé à l'intérieur de l'enceinte 1 et se déplaçant verticalement et tangentiellement au carrousel extérieur 8, de manière à pouvoir accéder à n'importe quel niveau d'étagère.

La plate-forme 17, destinée à recevoir les objets à charger et à décharger, est mobile le long d'un axe vertical, par exemple au moyen d'un moteur 51 qui engrène une crémaillère ou une courroie crantée 18, pour pouvoir se placer à tous les niveaux des étagères des carrousels 8, 9, ainsi qu'au niveau de la plate-forme d'entrée / sortie 13 de l'enceinte 1.

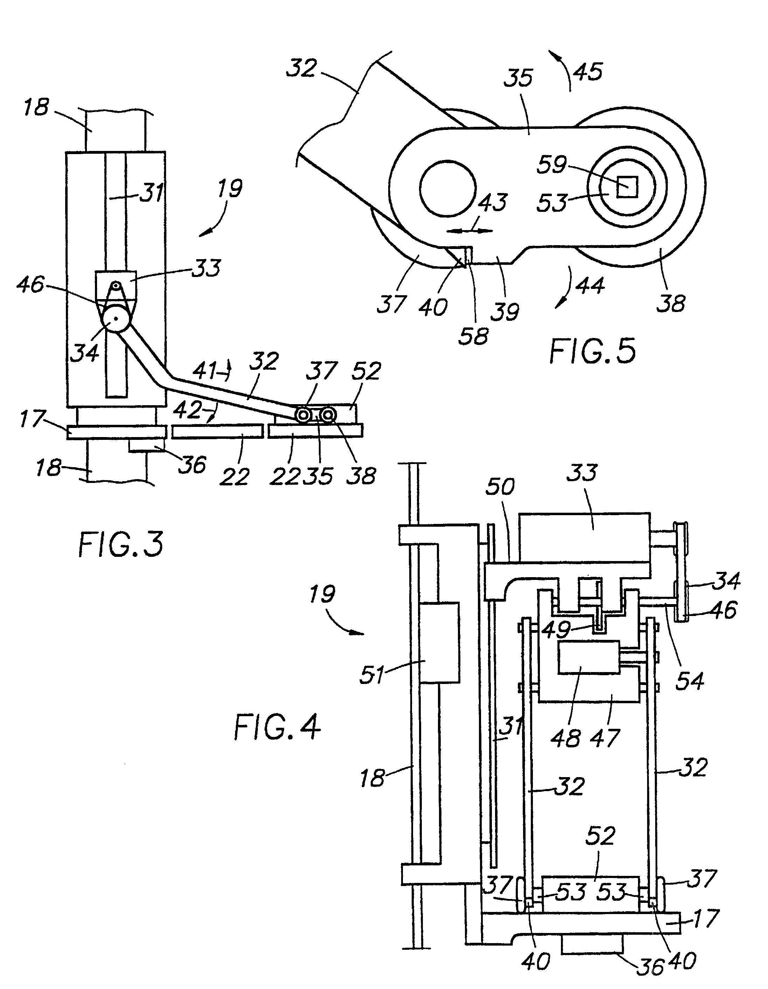

Sur les figures 3 et 4, l'extracteur 19 comprend un rail vertical 31 , fixé sur la plate-forme 17, et une pince en U portée par un chariot 50 librement mobile le long de ce rail. Les bras 32 de la pince, légèrement recourbés vers le centre de l'enceinte de stockage 1, peuvent être resserrées partiellement grâce à un moyen d'actionnement 48, tel qu'un électroaimant ou un moteur, pour saisir un objet 52. La base 47 du U de cette pince est fixée sur un axe 54 monté rotatif sur le chariot 50. L'axe 54 est solidaire d'une roue 34 coaxiale, entraînée en rotation, par exemple par l'intermédiaire d'une courroie 46, par un moteur 33 fixé sur le chariot 50. De cette manière, la pince est entraînée en rotation autour de l'axe 54, suivant les flèches 41, 42 de la figure 3. On peut prévoir en outre une roue codeuse 49 en association avec un lecteur optique (non représenté) pour pouvoir déterminer en permanence la position angulaire de la pince.

D'une manière détaillée sur la figure 5, chaque extrémité libre des branches 32 de la pince est munie d'une demi-mâchoire 35 articulée respective, susceptible de pivoter autour d'un axe parallèle à l'axe 54, et sur laquelle est montée librement rotative une roulette 37. Cette roulette, par exemple en caoutchouc, peut rouler sur les étagères 22 et sur les plates-formes 17 et 13, de manière à limiter les frottements lors des déplacements de la pince. Son axe de rotation coïncide avec l'axe de pivotement de la demi-mâchoire.

Chaque demi-mâchoire 35 comprend un tampon 53 à coefficient de frottement élevé destiné à saisir l'objet 52 à charger ou décharger, et un patin 39 muni d'une rampe 40. Ainsi, lorsque le patin 39 rencontre un niveau plus élevé, la rampe 40 a tendance à faire pivoter vers le haut la demi -mâchoire 35 par un effet de levier, ce qui soulève l'objet maintenu par la mâchoire de la pince.

De cette manière, l'extracteur 19 n'est pas perturbé par des différences de niveau qui peuvent exister entre les étagères en regard des deux carrousels 8, 9, et les plates-formes 13 et 17.

L'extrémité de chaque demi-mâchoire 35 peut être munie d'une roulette 38, également en caoutchouc, permettant de limiter les frottements lors des déplacements de la pince, cette roulette ayant un axe de rotation parallèle à celui de la roulette 37.

Les demi-mâchoires 35 peuvent être munies d'un capteur, par exemple un capteur de pression, de manière à détecter la présence ou non d'un objet saisi par la pince.

La rampe 40 peut avantageusement être montée mobile horizontalement (suivant la double flèche 43) sur un ressort 58, de manière à absorber les chocs qui peuvent se produire durant les déplacements de l'extrémité libre de la pince.

Les hauteurs respectives des deux carrousels 8, 9 sont ajustées de manière à ce que les étagères du carrousel intérieur 9 soient à un niveau légèrement inférieur aux étagères en regard du carrousel extérieur 8. Cette différence de niveau ne constitue un obstacle au déplacement de la pince et de l'objet saisi par la pince que lors d'un mouvement d'extraction d'un objet d'un logement 22 du carrousel intérieur 9, mouvement au cours duquel la rampe 40 entre en action pour soulever l'objet saisi et le faire franchir sans risque de blocage cette différence de niveau.

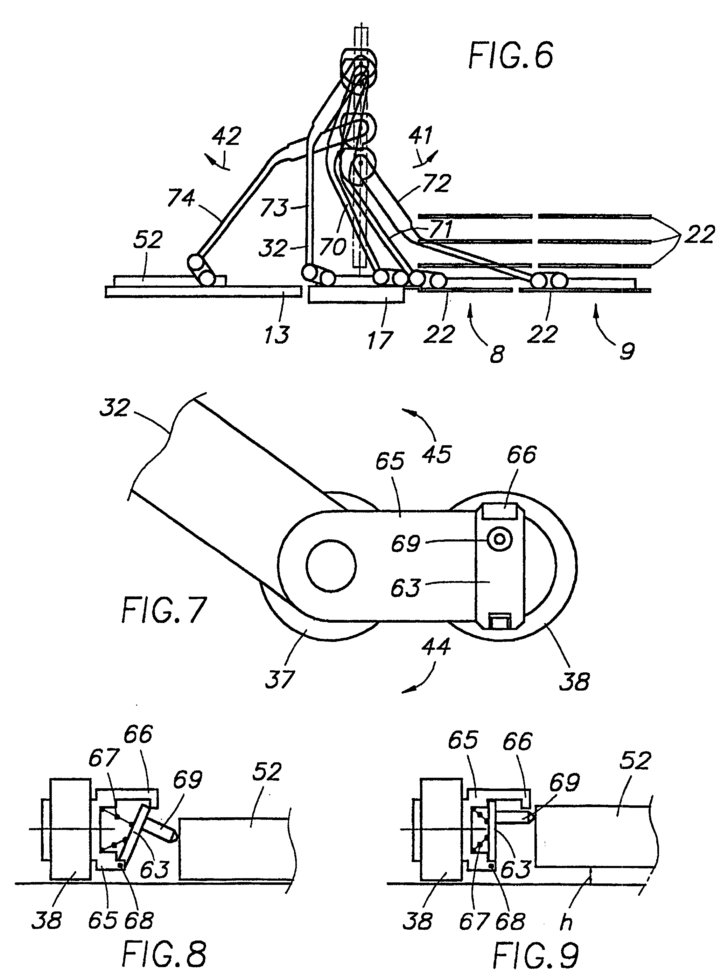

Alternativement, sur les figures 7 à 9, chaque demi- mâchoire 65 comprend sur sa face en regard de l'autre demi-mâchoire, un doigt de préhension 69 s'étendant dans un plan perpendiculaire à l'axe longitudinal de la demi-mâchoire, ce doigt présentant une surface d'extrémité pouvant avoir un coefficient de frottement élevé, destiné à saisir l'objet 52 à charger ou décharger.

Le doigt 69 est monté au voisinage d'une extrémité d'un bras 63 dont l'autre extrémité est fixée sur la demi-mâchoire 65, de manière pivotante autour d'un axe 68 sensiblement parallèle à l'axe longitudinal de la demi-mâchoire, cet axe étant situé au niveau du bord inférieur de la demi-mâchoire 65.
Le bras est écarté de la demi-mâchoire par des moyens élastiques, tels qu'un ressort 67, et appliqué contre une butée 66 située au niveau du bord supérieur de la demi-mâchoire 65 et à distance de celle-ci, de sorte qu'en position de repos (figure 8), le doigt 69 est incliné vers le bas.
Lorsque la pince est serrée sur un objet 52 à déplacer (figure 9), le bras 63 pivote autour de l'axe 68, en comprimant le ressort 67 et en se rapprochant de la demi-mâchoire 65, ce qui a pour effet de faire pivoter vers le haut l'extrémité du doigt 69, et donc de soulever par effet de levier l'objet 52 maintenu entre les demi-mâchoires 65 de la pince, d'une certaine hauteur h. Dans cette position, les doigts 69 respectifs des deux bras 62 de la pince sont sensiblement coaxiaux.

Sur la figure 6, les branches 32 de la pince en position de repos 70 sont sensiblement verticales, les roulettes d'extrémité 37, 38 reposant sur la plate-forme 17. Lorsque le moteur 33 entraîne la pince en rotation vers le centre de l'enceinte 1, suivant la flèche 41, le chariot 50 a tendance par son poids à descendre le long du rail 31, tandis que les roulettes 37 des extrémités des branches 32 de la pince se déplacent horizontalement en roulant sur la plate-forme 17, puis sur une étagère 22 en regard du carrousel extérieur 8 (position 71), pour atteindre éventuellement l'étagère 22 en regard du carrousel intérieur 9 (position 72) si le moteur poursuit sa rotation. Au cours d'une rotation de la pince dans l'autre sens, suivant la flèche 42, la force motrice produite par le moteur 33 fait remonter le chariot 50 le long du rail 31, jusqu'à ce que les roulettes 37 d'extrémités des bras 32 de la pince se retrouvent à nouveau sur la plate-forme 17 (position 73), puis le fait redescendre lorsque la pince 32 se trouve orientée vers l'extérieur de l'enceinte 1. Ce dernier mouvement est effectué lorsque la plate-forme 17 de l'extracteur 19 se trouve au niveau de la plate-forme d'entrée / sortie 13 de l'enceinte 1 (position 74).

Il apparaît donc sur cette figure que la pince 32 de l'extracteur selon l'invention peut atteindre n'importe quelle étagère sur l'un ou l'autre des carrousels 8, 9. Toutefois, pour que les étagères du carrousel intérieur 9 soient accessibles, il faut laisser libre un logement 22' par niveau du carrousel extérieur 8 de manière à permettre le passage des objets entre la plate-forme 17 de l'extracteur 19 et les étagères 22 du carrousel intérieur 9. En outre, si les étagères sont insuffisamment espacées d'un niveau à l'autre pour que les bras de la pince puissent atteindre un logement du carrousel intérieur 9, on peut prévoir que les étagères au niveau des logements 22' du carrousel extérieur 8 présentent deux fentes 20, 21 permettant le passage des bras 32 de la pince (figure 2). On peut prévoir également, comme montré en particulier sur la figure 6, que les bras de la pince soient légèrement recourbés en direction du centre de l'enceinte, de manière à présenter deux portions droites orientées l'une par rapport à l'autre suivant un angle obtus.

Pour effectuer le chargement ou le déchargement d'un objet, les moteurs 51, 33, 48, 14, 10 et 11 sont commandés de manière concourante par un logiciel de commande, ce qui permet de réduire d'une manière importante les durées de chargement et de déchargement.

En outre, le logiciel de commande de la pince est avantageusement conçu pour que les doigts 59 de préhension d'un objet 52 à déplacer se positionnent au voisinage du bord de l'objet situé du côté du sens du déplacement à effectuer. Ainsi, pour effectuer un mouvement d'insertion d'un objet dans l'enceinte 1, la pince attrape l'objet au voisinage de son bord le plus proche du centre de l'enceinte (position 74), ce qui a pour effet de soulever ce bord. Pour un mouvement inverse, la pince attrape l'objet au voisinage de son bord le plus proche de l'extérieur de l'enceinte (positions 71 à 73), ce qui a pour effet de soulever l'objet du côté de ce bord. De cette manière, les légères différences de niveaux qui peuvent exister entre les étagères en regard des deux carrousels 8, 9, et les plates-formes 13 et 17 ne risquent pas d'entraver les mouvements de l'objet 52 déplacé par la pince.

On peut prévoir un système de contre-poids, par exemple relié par un câble supporté par des poulies (non représentés), ou de ressorts dont la tension s'accroît à mesure que les bras 32 s'éloignent de la position verticale, pour alléger l'ensemble du chariot 50, du moteur 33 et de la pince, et ainsi réduire la puissance que doit développer le moteur 33.

Avantageusement, la hauteur de la porte 16 est ajustable par l'utilisateur, de sorte que les objets à stocker sont présentés à l'extérieur de l'enceinte 1 à une hauteur adaptée à l'environnement de travail ou à un système robotisé.

Les carrousels 8, 9 sont autoporteurs, c'est-à-dire qu'ils ne prennent pas appui sur les parois verticales 4, 4', 6, 7 et 7' de l'enceinte 1. Ces dernières peuvent donc être amovibles pour permettre un accès facile à l'intérieur de l'enceinte, notamment lors du chargement initial de l'enceinte ou lors d'opérations de maintenance.

Le dispositif de stockage selon l'invention peut être entièrement automatisé.
A cet effet, on peut installer sur l'extracteur 19, par exemple sous la plate-forme 17, un lecteur optique 36 capable de lire et de transmettre vers le processeur central des codes optiques imprimés sur des étiquettes collées sur les objets stockés. Ainsi, si l'enceinte 1 est chargée manuellement, on peut prévoir un programme de commande de l'extracteur 19 qui consiste à déplacer l'extracteur devant tous les emplacements 22 des carrousels 8, 9 pour lire le code optique figurant sur les objets, en relation avec la position des objets dans l'enceinte. Ces informations sont transmises au processeur central qui les range dans une base de données. De cette manière, l'utilisateur n'a pas besoin de connaître l'emplacement de chaque objet. Pour obtenir un conteneur particulier, il suffit d'introduire son code, et le processeur commande l'extracteur 19 en fonction de la position correspondant au code de l'objet demandé, figurant dans la base de données.

Un tel dispositif de stockage est particulièrement adapté au stockage d'objets nécessitant des conditions physico-chimiques strictes, tels que des échantillons biologiques ou chimiques.

A cet effet, on peut disposer dans la partie supérieure de l'enceinte 1 un système 12 de climatisation et de contrôle des paramètres de stockage, c'est-à-dire, la température et l'humidité à l'intérieur de l'enceinte, ce système assurant également la filtration et la circulation du gaz ambiant qui peut être de l'air ou un autre gaz, par exemple un gaz inerte tel que l'azote ou l'argon.
L'ouverture 16 présente des dimensions réduites de manière à limiter les échanges gazeux entre l'intérieur de l'enceinte et l'extérieur, et conserver des conditions internes de stockage stables.
Les parois 2, 3, 4, 4', 5, 6, 7 et 7' de l'enceinte sont constituées d'une double enveloppe qui isolent thermiquement l'intérieur de l'enceinte et permettent ainsi de maintenir constante la température interne durant plusieurs heures en cas de panne du système de climatisation.

Le système de climatisation 12 permet d'ajuster la température interne à une température de consigne comprise entre -20 et +20°C. L'air peut être déshydraté avant d'être envoyé dans l'enceinte de façon à éliminer le risque de formation de givre aux températures voisines ou inférieures à 0°C. L'air envoyé dans l'enceinte est également filtré de manière à éviter la contamination des échantillons stockés dans l'enceinte.

Le système de climatisation 12 produit en outre une circulation permanente de l'air dans l'enceinte 1 pour assurer une répartition de température homogène à tous les niveaux. En particulier, l'air circule de haut en bas, par le tube central 56, puis est dévié radialement au niveau de chaque étagère. A cet effet, les cylindres 56 et 57 sont percés d'une pluralité d'ouvertures pour permettre le passage de l'air. En arrivant sur les parois de l'enceinte, l'air est aspiré vers le haut par le système 12.

De cette manière, aucune intrusion d'air externe n'est possible car l'air est dévié du centre de l'enceinte 1 vers sa périphérie, ce qui a pour effet de repousser l'air vers l'extérieur de l'enceinte par toutes les jointures au niveau des parois de celle-ci et lorsque la porte est ouverte.
Cette circulation de l'air a également pour effet de produire une légère pressurisation dans l'enceinte (quelques millibars), ce qui évite là encore toute pénétration d'air extérieur.

Dans une application caractéristique de l'invention, le dispositif de stockage est utilisé pour stocker des molécules chimiques stockées en microplaques comportant une pluralité d'alvéoles, par exemple 96. Le processeur peut être connecté à un réseau informatique, ce qui le rend accessible en plusieurs points. Par ailleurs, le dispositif de stockage est couplé à un système robotisé capable de prendre et de déposer des microplaques sur la porte de l'enceinte, ce qui permet d'effectuer des préparations en mélangeant des molécules contenues dans les microplaques stockées dans l'enceinte.

## Revendications

1. Dispositif de stockage automatisé comprenant une enceinte de stockage (1) renfermant une multiplicité de logements (22) pour les objets à stocker (52), disposés côte à côte et répartis sur une pluralité de niveaux,
**caractérisé en ce qu'**il comprend un dispositif de chargement et de déchargement (19) mobile d'un logement (22) à l'autre, comportant :
- une plate-forme (17) pour transporter un objet à charger ou décharger, associée à des moyens (18, 51) pour la déplacer d'un niveau à l'autre ;
- une pince pour saisir un objet à charger ou décharger munie de deux bras (32) pivotants parallèles comportant chacun une extrémité libre et une extrémité solidaire en rotation d'un axe horizontal (54) commun aux deux bras (32) ; des moyens d'entraînement (33) en rotation des bras autour de cet axe horizontal (54) ; et
- des moyens (48) pour écarter et resserrer les extrémités libres respectives des bras (32), les extrémités libres des bras (32) étant chacune munies de moyens (37) respectifs pour se déplacer sur la plate-forme (17) lorsque les bras (32) sont entraînés en rotation autour de l'axe (54), les moyens d'entraînement (33) en rotation des bras (32) et l'axe horizontal (54) étant librement mobiles le long d'un axe vertical (31) solidaire de la plate-forme (17) et se déplaçant le long de cet axe vertical sous l'effet de la gravité et de l'entraînement en rotation des bras (32) autour de l'axe horizontal (54).

2. Dispositif selon la revendication 1,
**caractérisé en ce que** les logements de l'enceinte de stockage (1) sont répartis sur des étagères annulaires (8, 9) fixées sur deux cylindres concentriques (56, 57), à savoir un cylindre extérieur (57) et un cylindre intérieur (56), chaque cylindre étant entraîné en rotation autour de leur axe longitudinal d'une manière indépendante, la plate-forme de chargement et de déchargement (17) pouvant se déplacer le long d'un axe vertical (18) tangentiellement aux étagères (8) fixées sur le cylindre extérieur (57).

3. Dispositif selon la revendication 2,
**caractérisé en ce que** les hauteurs respectives des étagères (8, 9) montées sur les deux cylindres (57, 56) sont ajustées de manière à ce que les étagères (9) montées sur le cylindre intérieur (56) soient à un niveau légèrement inférieur aux étagères (8) en regard, montées sur le cylindre extérieur (8).

4. Dispositif selon l'une des revendications 2 à 3,
**caractérisé en ce que** les étagères (8, 9) sont entièrement supportées par les cylindres (56, 57), de manière à rendre amovibles les parois verticales (4, 4', 6, 7, 7') de l'enceinte (1).

5. Dispositif selon l'une des revendications 2 à 4,
**caractérisé en ce qu'**il comprend un système de climatisation (12) produisant à l'intérieur de l'enceinte (1) une circulation d'air de haut en bas dans le cylindre central (56), puis une circulation radiale de l'intérieur vers l'extérieur au niveau de chaque étagère (8, 9) par une pluralité d'ouvertures réalisées dans les cylindres (56, 57), et enfin une circulation de l'air de bas en haut le long des parois verticales (4, 4', 6, 7, 7') de l'enceinte (1).

6. Dispositif selon l'une des revendications précédentes,
**caractérisé en ce que** l'extrémité libre des bras (32) de la pince comprend des moyens pour soulever légèrement l'objet (52) lorsque la pince est resserrée sur celui-ci, de manière à permettre à l'objet de franchir d'éventuelles différences de niveaux qui peuvent exister sur le trajet de l'objet déplacé par la pince à l'intérieur de l'enceinte de stockage (1).

7. Dispositif selon l'une des revendications précédentes,
**caractérisé en ce que** l'extrémité libre des bras (32) d e la pince est munie d'une demi-mâchoire (35) pivotante autour de l'axe de rotation de la roulette (37), comportant un tampon (53) à coefficient de frottement élevé destiné à venir s'appliquer contre l'objet (52) à saisir, et un patin chanfreiné (39) qui, en rencontrant un obstacle, fait pivoter par effet de levier la demi-mâchoire (35) vers le haut et soulève légèrement l'objet saisi pour le faire franchir l'obstacle.

8. Dispositif selon la revendication 7,
**caractérisé en ce que** le patin (39) comprend une rampe (40) montée mobile horizontalement sur un ressort (58), de manière à absorber les chocs qui peuvent se produire durant les déplacements de l'extrémité libre de la pince.

9. Dispositif selon l'une des revendications précédentes,
**caractérisé en ce que** la pince comprend deux demi-mâchoires (65) montées pivotantes respectivement aux extrémités libres des bras (32) de la pince, autour d'un axe parallèle à l'axe horizontal (54), chaque demi-mâchoire comportant un doigt (69) destiné à venir s'appliquer contre un objet (52) à saisir, ce doigt étant monté pivotant dans un plan perpendiculaire à l'axe longitudinal de la demi-mâchoire, pour soulever légèrement l'objet en pivotant, lorsque la pince est resserrée sur l'objet (52).

10. Dispositif selon la revendication 9,
**caractérisé en ce que** le doigt (69) est monté au voisinage de l'extrémité d'un bras (63), l'autre extrémité de ce bras étant fixée sur la demi-mâchoire, de manière pivotante autour d'un axe (68) sensiblement parallèle à l'axe longitudinal de la demi-mâchoire, ce bras étant écarté de la demi-mâchoire par des moyens élastiques (67) contre une butée (66).

11. Dispositif selon l'une des revendications 7 à 10,
**caractérisé en ce que** chaque demi-mâchoire comprend deux roulettes (37, 38) situées sensiblement dans un même plan, ces roulettes étant montées rotatives autour d'axes parallèles à l'axe horizontal (54), l'axe de rotation d'une des deux roulettes coïncidant avec l'axe de pivotement de la demi-mâchoire.

12. Dispositif selon l'une des revendications précédentes,
**caractérisé en ce que** l'enceinte (1) présente une ouverture horizontale (16) qui coopère avec une plate-forme d'entrée /sortie (13) mobile verticalement grâce à des moyens de déplacement (14, 15), entre une position de fermeture de l'ouverture (16) et de chargement ou de déchargement d'un objet de l'enceinte (1), et une position d'ouverture dans laquelle la pince peut y prendre ou y déposer un objet.

13. Dispositif selon la revendication 12,
caractérisé en ce la plate-forme (13) comprend des moyens (60) pour détecter la présence d'un objet sur sa surface supérieure.

14. Dispositif selon l'une des revendications précédentes,
**caractérisé en ce que** le dispositif de chargement et de déchargement (19) comprend un lecteur optique (36) qui coopère avec des codes optiques apposés sur les objets à stocker.

15. Dispositif selon l'une des revendications précédentes,
**caractérisé en ce que** la pince est munie de moyens pour détecter la présence d'un objet entre ses bras (32).

## Patentansprüche

1. Vorrichtung zum automatischen Speichern mit einem Speicherbereich (1), der eine Mehrzahl von Lagereinrichtungen (22) für die zu lagernden Gegenstände aufweist, die Seite an Seite angeordnet und auf eine Mehrzahl von Niveaus verteilt sind, **dadurch gekennzeichnet, dass** die Vorrichtung eine von einer Lagereinrichtung (22) zur anderen bewegliche Be- und Entladeeinrichtung (19) aufweist, mit:
einer Plattform (17) zum Transport eines zu beladenden oder zu entladenden Gegenstandes, die mit Mitteln (18, 51) versehen ist, um sie von einem Niveau auf ein anderes zu versetzen;
einer Klammer zum Ergreifen eines zu beladenden oder zu entladenden Gegenstandes, die mit zwei parallel verschwenkbaren Armen (32) versehen ist, von denen jeder ein freies Ende und ein mit einer den beiden Armen (32) gemeinsamen, waagerechten Achse (54) zur Rotation verbundenes Ende aufweist; mit Antriebsmitteln (33) zur Rotation der Arme um diese waagerechte Achse (54); und
Mitteln (48) zum Spreizen und Zusammenziehen der jeweiligen freien Enden der Arme (32), wobei jedes der freien Enden der Arme (32) jeweils mit Mitteln (37) versehen ist, um sich auf der Plattform (17) zu bewegen, während die Arme (32) rotatorisch um die Achse (54) angetrieben sind und die Antriebsmittel (33) zur Rotation der Arme (32) und die waagerechte Achse (54) längs einer mit der Plattform (17) verbundenen, senkrechten Achse (31) frei beweglich sind und entlang dieser senkrechten Achse unter dem Einfluss der Schwerkraft und durch den rotatorischen Antrieb der Arme (32) um die waagerechte Achse (54) bewegbar sind.

2. Vorrichtung nach Anspruch 1, **dadurch gekennzeichnet, dass** die Lagereinrichtungen des Speicherbereichs (1) in ringförmige Gestelle (8, 9) aufgeteilt sind, die an zwei konzentrischen Zylindern (56, 57), und zwar einem äußeren Zylinder (57) und einem inneren Zylinder (56), befestigt sind, wobei jeder Zylinder um seine Längsachse unabhängig rotatorisch angetrieben ist und die zum Beladen und Entladen vorgesehene Plattform (17) längs einer senkrechten Achse (18) tangential zu den Gestellen (8), die an dem äußeren Zylinder (57) befestigt sind, bewegbar ist.

3. Vorrichtung nach Anspruch 2, **dadurch gekennzeichnet, dass** die jeweiligen Höhen der an den beiden Zylindern (56, 57) angebrachten Gestelle (8, 9) derart eingestellt sind, dass die an den inneren Zylindern (56) angebrachten Gestelle (9) sich im Hinblick auf die an den äußeren Zylindern (57) angebrachten Gestelle (8) auf einem geringfügig niedrigeren Niveau befinden.

4. Vorrichtung nach Anspruch 2 oder 3, **dadurch gekennzeichnet, dass** die Gestelle (8, 9) derart vollständig von den Zylindern (56, 57) gestützt sind, dass die senkrechten Wände (4, 4', 6, 7, 7') des Speicherbereichs (1) versetzbar sind.

5. Vorrichtung nach einem der Ansprüche 2 bis 4, **dadurch gekennzeichnet, dass** sie ein Klimatisierungssystem (12) aufweist, das im Innern des Speicherbereichs (1) eine in dem zentralen Zylinder (56) von oben nach unten verlaufende Luftzirkulation, außerdem eine auf dem Niveau jedes Gestells (8, 9) von innen nach außen durch eine Mehrzahl von in den Zylindern (56, 57) befindlichen Öffnungen gehende Zirkulation und schließlich eine von unten nach oben entlang der senkrechten Wände (4, 4', 6, 7, 7') des Speicherbereichs (1) verlaufende Luftzirkulation erzeugt.

6. Vorrichtung nach einem der vorhergehenden Ansprüche, **dadurch gekennzeichnet, dass** das freie Ende der Arme (32) der Klammer Mittel aufweist, um den Gegenstand (52) leicht anzuheben, wenn die Klammer um diesen zusammengezogen wird, um auf diese Weise dem Gegenstand zu erlauben, etwaige Niveauunterschiede zu überwinden, die auf der Strecke des durch die Klammer in das Innere des Speicherbereichs (1) versetzten Gegenstandes auftreten können.

7. Vorrichtung nach einem der vorhergehenden Ansprüche, **dadurch gekennzeichnet, dass** das freie Ende der Arme (32) der Klammer mit einer um die Rotationsachse der Rolle (37) verschwenkbaren Halb-Klemmbacke (35) versehen ist, die einen Dämpfer (53) mit erhöhtem Reibungskoeffizienten aufweist, der dazu bestimmt ist, an dem zu ergreifenden Gegenstand (52) angesetzt zu werden und einem angefasten Segment (39), das, wenn es auf ein Hindernis trifft, durch die Hebelwirkung die Halb-Klemmbacke (35) nach oben verschwenkt, den ergriffenen Gegenstand leicht anhebt und das Hindernis derart überwindet.

8. Vorrichtung nach Anspruch 7, **dadurch gekennzeichnet, dass** das Segment (39) eine waagerecht beweglich an einer Feder (58) angeordnete Rampe (40) aufweist, um derart die Erschütterungen aufnehmen, die während der Verlagerung des freien Endes der Klammer auftreten können.

9. Vorrichtung nach einem der vorhergehenden Ansprüche, **dadurch gekennzeichnet, dass** die Klammer zwei Halb-Klemmbacken (65) aufweist, die bezüglich der freien Enden der Arme (32) der Klammer um eine zu der waagerechten Achse (54) parallele Achse verschwenkbar angeordnet sind, wobei jede Halb-Klemmbacke einen Finger (69) aufweist, der dazu bestimmt ist, an dem zu ergreifenden Gegenstand (52) angesetzt zu werden und dieser Finger in einer Ebene senkrecht zu der Längsachse der Halb-Klemmbacke verschwenkbar angeordnet ist, um den Gegenstand beim Verschwenken leicht anzuheben, wenn die Klammer um den Gegenstand (52) zusammengezogen wird.

10. Vorrichtung nach Anspruch 9, **dadurch gekennzeichnet, dass** der Finger (69) zum einen Ende eines Arms (63) benachbart angeordnet ist, während das andere Ende dieses Arms an der Halb-Klemmbacke festgelegt und um eine zu der Längsachse der Halb-Klemmbacke im Wesentlichen parallele Achse (68) verschwenkbar ist, wobei dieser Arm von der Halb-Klemmbacke durch elastische Mittel (67) gegen einen Anschlag (66) abgespreizt ist.

11. Vorrichtung nach einem der Ansprüche 7 bis 1 0 , **dadurch gekennzeichnet, dass** jede Halb-Klemmbacke zwei im Wesentlichen in der gleichen Ebene befindliche Rollen (37, 38) aufweist, wobei diese Rollen drehbeweglich um zu der waagerechten Achse (54) parallele Achsen angeordnet sind und die Rotationsachse einer der beiden Rollen mit der Schwenkachse der Halb-Klemmbacke zusammenfällt.

12. Vorrichtung nach einem der vorhergehenden Ansprüche, **dadurch gekennzeichnet, dass** der Speicherbereich (1) eine waagerechte Öffnung (16) aufweist, die mit einer durch Verlagerungsmittel (14, 15) senkrecht beweglichen Eintritts- / Ausgangsplattform (13) zwischen einer geschlossenen Position der Öffnung (16) mit einem Belade- bzw. Entladevorgang eines Gegenstandes in dem Speicherbereich und einer Öffnungsposition zusammenwirkt, in der die Klammer dort einen Gegenstand wegnehmen bzw. abstellen kann.

13. Vorrichtung nach Anspruch 12, **dadurch gekennzeichnet, dass** diese Plattform (13) ein Mittel (60) aufweist, um die Anwesenheit eines Gegenstandes an seiner oberen Oberfläche festzustellen.

14. Vorrichtung nach einem der vorhergehenden Ansprüche, **dadurch gekennzeichnet, dass** die Belade- und Entladeeinrichtung (19) eine optische Leseeinrichtung (36) aufweist, die mit optischen Codes zusammenwirken, welche an den zu lagernden Gegenständen angebracht sind.

15. Vorrichtung nach einem der vorhergehenden Ansprüche, Mitteln zur Registrierung der Anwesenheit eines Gegenstandes zwischen ihren Armen (32) versehen ist.

## Claims

1. Device for automated storage comprising a storage enclosure (1) containing a multiplicity of housings (22) for the objects to be stored (52), disposed side by side and distributed on a plurality of levels, **characterised in that** it comprises a loading and unloading device (19) movable from one housing (22) to the other, comprising:
- a platform (17) for transporting an object to be loaded or unloaded, associated with means (18, 51) for moving it from one level to the other;
- a gripper for grasping an object to be loaded or unloaded, provided with two parallel pivoting arms (32) each comprising a free end and an end locked in rotation to a horizontal shaft (54) common to the two arms (32) ;
- means (33) for rotational entrainment of the arms about this horizontal shaft (54); and
- means (48) for opening and closing the respective free ends of the arms (32), the free ends of the arms (32) each being provided with respective means (37) for moving on the platform (17) when the arms (32) are entrained in rotation about the shaft (54), the means (33) for rotational entrainment of the arms (32) and the horizontal shaft (54) being freely mobile along a vertical shaft (31) locked to the platform (17) and moving along this vertical shaft under the effect of gravity and the rotational entrainment of the arms (32) about the horizontal shaft (54).

2. Device according to claim 1, **characterised in that** the housings of the storage enclosure (1) are distributed on annular shelves (8, 9) fixed on two concentric cylinders (56, 57), namely an outer cylinder (57) and an inner cylinder (56), each cylinder being entrained in rotation about their longitudinal axis independently, the loading and unloading platform (17) being capable of moving along a vertical shaft (18) tangentially to the shelves (8) fixed on the outer cylinder (57).

3. Device according to claim 2, **characterised in that** the respective heights of the shelves (8, 9) mounted o:n the two cylinders (57, 56) are adjusted so that the shelves (9) mounted on the inner cylinder (56) are at a slightly lower level than the facing shelves (8) mounted on the outer cylinder (8).

4. Device according to one of claims 2 to 3, **characterised in that** the shelves (8, 9) are entirely supported by the cylinders (56, 57), so as to make the vertical walls (4, 4', 6, 7, 7') of the enclosure (1) detachable.

5. Device according to one of claims 2 to 4, **characterised in that** it comprises a climate control system (12)producing inside the enclosure (1) a flow of air from the top downwards in the central cylinder (56), then a radial flow from the interior towards the exterior on the level of each shelf (8, 9) through a plurality of openings produced in the cylinders (56, 57), and lastly a flow of air from the bottom upwards along the vertical walls (4, 4', 6, 7, 7') of the enclosure (1).

6. Device according to one of the preceding claims, **characterised in that** the free end of the arms (32) of the gripper comprises means for lifting the object (52) slightly when the gripper is closed on the latter so as to allow the object to pass over any differences in level which may exist on the path of the object moved by the gripper inside the storage enclosure (1).

7. Device according to one of the preceding claims, **characterised in that** the free end of the arms (32) of the gripper is provided with a half-jaw (35) pivoting about the axis of rotation of the wheel (37), comprising a pad (53) with a high coefficient of friction designed to be applied against the object (52) to be grasped, and a chamfered skid (39) which, on encountering an obstacle, pivots the half-jaw (35) upwards through leverage and raises the grasped object slightly to pass it over the obstacle.

8. Device according to claim 7, **characterised in that** the skid (39) comprises a ramp (40) mounted so that it can move horizontally on a spring (58), so as to absorb the jolts which may occur during the movements of the free end of the gripper.

9. Device according to one of the preceding claims, **characterised in that** the gripper comprises two half-jaws (65) mounted so as to be pivotable respectively at the free ends of the arms (32) of the gripper about an axis parallel to the horizontal shaft (54), each half-jaw comprising a finger (69) designed to be applied against an object (52) to be grasped, this finger being mounted so as to be pivotable in a plane perpendicular to the longitudinal axis of the half-jaw, to lift the object slightly by pivoting when the gripper is closed on the object (52).

10. Device according to claim 9, **characterised in that** the finger (69) is mounted in the vicinity of the end of one arm (63), the other end of this arm being fixed to the half-jaw, so as to be pivotable about a shaft (68) substantially parallel to the longitudinal axis of the half-jaw, this arm being moved away from the half-jaw by elastic means (67) against a stop (66).

11. Device according to one of claims 7 to 10, **characterised in that** each half-jaw comprises two wheels (37, 38) situated substantially in a same plane, these wheels being mounted so as to be rotatable about axes parallel to the horizontal shaft (54), the axis of rotation of one of the two wheels coinciding with the pivoting axis of the half-jaw.

12. Device according to one of the preceding claims, **characterised in that** the enclosure (1) exhibits a horizontal opening (16) which co-operates with an in/out platform (13) movable vertically by virtue of motive means (14, 15) between a closed position of the opening (16) for loading or unloading of an object from the enclosure (1), and an open position in which the gripper can remove or deposit an object therein.

13. Device according to claim 12, **characterised in that** the platform (13) comprises means (60) for detecting the presence of an object on its upper surface.

14. Device according to one of the preceding claims, **characterised in that** the loading and unloading device (19) comprises an optical reader (36) which co-operates with optical codes on the objects to be stored.

15. Device according to one of the preceding claims, **characterised in that** the gripper is provided with means for detecting the presence of an object between its arms (32).
